# FASCICULE DE BREVET EUROPEEN

(11) **EP 3 130 815 B1**
(45) Date de publication et mention de la délivrance du brevet: **13.12.2017**
(21) Numéro de dépôt: 16181047.8
(22) Date de dépôt: 25.07.2016
(51) Int. Cl.: F16D 3/72

(54) **MOYEN D'ACCOUPLEMENT FLEXIBLE, TRANSMISSION MECANIQUE ET AERONEF**
FLEXIBLES KUPPLUNGSMITTEL, MECHANISCHE ÜBERTRAGUNG UND LUFTFAHRZEUG
FLEXIBLE COUPLING MEANS, A MECHANICAL TRANSMISSION, AND AN AIRCRAFT

(30) Priorité: 07.08.2015 FR 1501691
(43) Date de publication de la demande: 15.02.2017
(73) Titulaire: Airbus Helicopters, 13725 Marignane Cedex (FR)
(72) Inventeur: LE RU, John, 37310 TAUXIGNY (FR)
(74) Mandataire: GPI & Associés

(56) Documents cités:
- FR-A- 1 426 477
- FR-A1- 2 449 231
- FR-A1- 2 990 011
- JP-U- H0 253 527
- US-A- 4 133 188

## Description

La présente invention concerne un moyen d'accouplement flexible qui tolère des déplacements angulaires et axiaux pour lier deux organes mécaniques tournants. Le moyen d'accouplement lie par exemple un arbre de transmission de puissance à une pièce ou un ensemble mécanique tel qu'un turbomoteur de giravion. L'invention concerne aussi une transmission mécanique munie du moyen d'accouplement flexible et un aéronef.

Par conséquent, l'invention se situe dans le domaine technique de la transmission de puissance d'un organe mécanique à un autre organe mécanique, notamment des organes mécaniques d'un giravion.

En effet, la plupart des giravions construits actuellement sont équipés d'au moins un turbomoteur à turbine libre. La puissance est alors prélevée sur un étage basse pression de la turbine libre, lequel étage est mécaniquement indépendant de l'ensemble du compresseur et de l'étage haute pression du turbomoteur. La turbine libre d'un turbomoteur ayant une vitesse de rotation généralement comprise entre 20 000 et 50 000 tours par minute, une boîte de réduction de cette vitesse de rotation est nécessaire pour la liaison au rotor principal du giravion dont la vitesse de rotation est sensiblement comprise entre 200 et 400 tours par minute: il s'agit de la boîte de transmission principale de puissance dénommée parfois « boîte de transmission de puissance » et connue sous l'acronyme BTP.

Dans ces conditions, le turbomoteur est relié à la boîte de transmission principale du giravion via au moins un arbre de transmission tournant autour de son axe de rotation à une vitesse souvent supérieure à 5000 tours par minute.

De même, un giravion peut comporter un rotor arrière entraîné par au moins un arbre de transmission de puissance pour le contrôle du mouvement en lacet du giravion. La vitesse de rotation de ce rotor arrière est également inférieure à la vitesse de rotation de la turbine libre.

En outre, il est rappelé que la puissance transmise par un élément en rotation autour d'un axe est égale au produit de la vitesse de rotation de cet élément par le couple mécanique appliqué audit élément.

D'une façon générale, un arbre de transmission de puissance doit être solidement fixé par des moyens d'accouplement aux organes mécaniques devant être mis en relation. Un tel arbre de transmission de puissance est dénommé plus simplement « arbre de transmission » par la suite.

De plus, les moyens d'accouplement doivent permettre à l'arbre de transmission de transférer la puissance développée par un organe mécanique à un autre organe mécanique dans des conditions extrêmes, à savoir lorsque les organes mis en relation ne sont pas correctement alignés l'un par rapport à l'autre.

Un moyen d'accouplement d'un arbre de transmission à un organe mécanique est alors dimensionné pour autoriser un désalignement axial et angulaire entre l'arbre de transmission et l'organe mécanique.

Un moyen d'accouplement connu autorisant ces désalignements est muni d'un premier organe annulaire et d'un deuxième organe annulaire.

Chaque organe annulaire comporte un disque annulaire flexible de fine épaisseur s'étendant radialement d'une base vers une périphérie externe. La base est solidaire d'un moyen de fixation à un organe tournant, tel qu'un arbre de transmission.

Chaque disque annulaire est dénommé parfois « diaphragme ». Le terme diaphragme est dès lors utilisé par la suite par commodité.

Dès lors, les deux organes annulaires sont reliés l'un à l'autre uniquement via la périphérie externe des diaphragmes. Ces périphéries externes peuvent être fixées l'une à l'autre par soudure, ou encore à l'aide de boulons et d'écrous de blocage par exemple.

Les moyens d'accouplement à diaphragmes proposent une solution intéressante pour réaliser la liaison d'organes tournants susceptibles d'être désalignés.

De tels moyens d'accouplement à diaphragmes possèdent un niveau de fiabilité relativement élevé grâce à un nombre réduit de pièces. Néanmoins, les moyens d'accouplement à diaphragmes présentent des diaphragmes de faibles épaisseurs pouvant induire une certaine fragilité en dehors des désalignements axiaux et angulaires nominaux pris en compte lors de leur dimensionnement.

Le document US 5 588 917 présente un moyen de liaison comprenant deux chemins de transmission de couple, un chemin incluant des cannelures.

Le document FR 2 990 011 décrit un moyen d'accouplement muni d'un premier membre apte à être fixé à un premier organe tournant et d'un deuxième membre apte à être fixé à un deuxième organe tournant. Le premier membre est pourvu d'un premier diaphragme, le deuxième membre étant pourvu d'un deuxième diaphragme solidarisé au premier diaphragme. Un dispositif de secours de transmission de couple comporte au moins un système à baïonnette incluant une protubérance solidaire d'un membre coopérant avec une rainure coudée solidaire de l'autre membre en étant insérée dans la rainure coudée par un mouvement de poussée-rotation, ledit moyen d'accouplement comportant en l'absence de ladite rupture des jeux axiaux en compression et en traction et un jeu circonférentiel entre chaque protubérance et des parois délimitant la rainure coudée correspondante. Le document FR 2 990 011 divulgue l'introduction de la revendication 1.

Les documents FR 2449231, US 4133188, JP H02 53527 U, FR 1426477 sont aussi connus.

La présente invention a alors pour objet de proposer un moyen d'accouplement flexible autorisant un désalignement axial et radial entre deux organes tournants dans des conditions normales. Ce moyen d'accouplement vise à minimiser les risques de rupture de la transmission de couple entre lesdits organes tournants suite à la rupture d'un diaphragme ou de la liaison entre deux diaphragmes, en ayant cependant une structure relativement simple.

Selon l'invention, un moyen d'accouplement est muni d'un premier membre apte à être fixé à un premier organe tournant et d'un deuxième membre apte à être fixé à un deuxième organe tournant, le premier membre étant pourvu d'un premier diaphragme et le deuxième membre étant pourvu d'un deuxième diaphragme. Le deuxième diaphragme est solidarisé au premier diaphragme pour autoriser un décalage entre le premier organe tournant et le deuxième membre. Le moyen d'accouplement inclut un dispositif complémentaire de transmission de couple pour au moins lier le premier membre au deuxième membre en cas de rupture d'au moins un diaphragme ou d'une liaison entre les diaphragmes.

Le décalage peut être un décalage axial et / ou angulaire et / ou latéral.

Les diaphragmes peuvent être d'un type connu. La périphérie externe dite « première périphérie externe » du premier diaphragme peut alors être solidarisée à la périphérie externe dite « deuxième périphérie externe » du deuxième diaphragme par un système de fixation. Un tel système de fixation peut être un moyen de soudure ou peut comprendre des moyens de boulonnage par exemple.

Par ailleurs, le dispositif complémentaire comporte au moins une pluralité de protubérances réparties circonférentiellement sur un premier cylindre du premier membre et une pluralité de butées réparties circonférentiellement sur un deuxième cylindre du deuxième membre, chaque protubérance présentant au moins une face à double inclinaisons dite « face de glissement » en regard d'une face à double inclinaisons d'une butée dite « première face d'appui », chaque protubérance présentant une face dite « face de blocage » en regard d'un face dite « deuxième face d'appui » du deuxième membre.

En l'absence d'une rupture d'au moins un diaphragme ou d'une liaison entre les diaphragmes, un premier jeu radial sépare chaque protubérance du deuxième membre selon une direction passant par un rayon du premier cylindre et un deuxième jeu radial sépare chaque face d'appui du premier membre selon une direction passant par un rayon du deuxième cylindre. Un premier jeu axial sépare chaque protubérance d'une première face d'appui et un deuxième jeu axial sépare chaque face de blocage d'une deuxième face d'appui selon une direction axiale parallèle à un axe de rotation du premier membre et du deuxième membre.

Cet axe de rotation représente l'axe de rotation autour duquel le premier membre et le deuxième membre effectuent une rotation en l'absence de désalignement. Cet axe de rotation est alors confondu avec l'axe de symétrie de chaque membre en l'absence de désalignement.

En outre, chaque face à double inclinaisons présente une première inclinaison pour permettre le coincement d'une protubérance entre une première face d'appui et une deuxième face d'appui en annulant lesdits jeux axiaux suite à une rotation relative des protubérances par rapport aux faces d'appui autour dudit axe de rotation en cas d'une dite rupture, chaque face à double inclinaisons présentant une deuxième inclinaison pour centrer le première cylindre par rapport au deuxième cylindre suite à la rotation relative.

Selon une variante, la face de blocage et la deuxième face d'appui sont des face à double inclinaisons.

Le terme « axial » fait référence à une direction parallèle à un axe de rotation des membres et à un axe de symétrie des membres.

Le terme « radial » fait référence à une direction perpendiculaire à un axe de rotation des membres et à un axe de symétrie des membres. Le terme radial est utilisé en référence à la forme annulaire des diaphragmes et des cylindres.

Un tel moyen d'accouplement comporte ainsi un dispositif principal de transmission d'un couple. Ce dispositif principal est pourvu de deux diaphragmes liés l'un à l'autre.

De plus, le moyen d'accouplement possède un dispositif complémentaire de transmission de couple. Ce dispositif complémentaire est pourvu de tampons tangents prenant la forme de faces d'appui et de protubérances.

Durant un mode de fonctionnement normal à savoir en l'absence de rupture de la liaison entre les diaphragmes, le moyen d'accouplement permet de transmettre un couple au travers des diaphragmes. Favorablement, le premier membre entraîne en rotation le deuxième membre.

De plus, ces diaphragmes peuvent se déformer localement pour autoriser des désalignements entre le premier membre et le deuxième membre.

En outre, le dispositif complémentaire peut protéger l'accouplement en limitant ces désalignements durant le mode de fonctionnement normal.

Le dispositif complémentaire peut ainsi protéger l'accouplement en limitant mécaniquement une rotation relative entre le premier membre et le deuxième membre. Suite à une telle rotation relative, chaque protubérance vient en contact contre une première face d'appui et une deuxième face d'appui ce qui permet de limiter la rotation relative entre le premier membre et le deuxième membre.

En effet, la face de glissement d'une protubérance représente une forme coopérant par interférence de forme avec une contre-forme représentée par la première face d'appui. De même, la face de blocage d'une protubérance représente une forme coopérant par interférence de forme avec une contre-forme représentée par la deuxième face d'appui.

De même, le dispositif complémentaire peut protéger l'accouplement en limitant mécaniquement la distance séparant axialement le premier membre et le deuxième membre.

Le dispositif complémentaire peut aussi protéger l'accouplement en limitant mécaniquement le désalignement angulaire admissible entre le premier membre et le deuxième membre.

En particulier, la valeur d'un jeu axial induit la déformation axiale maximale admissible en compression du moyen d'accouplement, et la valeur de l'autre jeu axial correspond à la déformation axiale maximale admissible par le moyen d'accouplement en traction. Les valeurs conjointes des jeux axiaux induisent la déformation maximale admissible lors d'un désalignement angulaire entre le premier membre et le deuxième membre.

Par suite, le dispositif complémentaire présente des jeux radiaux et axiaux autorisant des désalignements entre le premier membre et le deuxième membre. Toutefois, ces jeux axiaux et radiaux sont dimensionnés pour que le dispositif complémentaire limite le désalignement autorisé dans une plage donnée, par interférence de forme entre les protubérances et les faces d'appui.

Par ailleurs, le dispositif complémentaire est aussi utile durant un mode de secours, le mode de secours étant mis en oeuvre en cas de rupture d'un diaphragme ou de la liaison mécanique entre les diaphragmes.

A l'initiation du mode de secours, le premier membre effectue une rotation relativement au deuxième membre.

La première inclinaison de chaque face à double inclinaisons induit un déplacement axial de chaque protubérance par rapport aux faces d'appui correspondantes. Suite à ce déplacement, chaque protubérance est coincée axialement entre une première face d'appui et une deuxième face d'appui. Les jeux axiaux sont alors annulés.

Dès lors, la transmission de couple par coincement de forme entre la protubérance ainsi qu'une première face d'appui et une deuxième face d'appui devient possible.

De plus, la deuxième inclinaison des faces à double inclinaisons tend à générer un déplacement radial de chaque protubérance par rapport aux faces d'appui correspondantes. Toutefois, chaque protubérance tend à se déplacer radialement selon sa propre direction radiale. Dès lors, les protubérances tendent à se déplacer radialement selon des directions différentes voire opposées. Ce phénomène tend alors à centrer le premier membre par rapport au deuxième membre en maintenant les jeux radiaux entre ces membres.

Par ailleurs, la première inclinaison et la deuxième inclinaison peuvent être dimensionnées pour provoquer des déplacements axiaux et radiaux concomitants afin d'éviter la création d'une liaison hyperstatique.

La liaison, assimilable à des formes et contre-formes coniques, réalisée par le dispositif complémentaire est alors par nature auto-verrouillée.

Le dispositif complémentaire permet ainsi d'assurer la continuité de la transmission du mouvement de rotation et du couple en cas de rupture mécanique entre les diaphragmes.

De plus, le dispositif complémentaire permet ainsi de positionner radialement le premier membre par rapport au deuxième membre.

Cette caractéristique s'avère intéressante. En effet, certains dispositifs de secours présentent des jeux de fonctionnement. Ces jeux de fonctionnement induisent parfois des balourds susceptibles de dégrader le fonctionnement du moyen d'accouplement.

A l'inverse, le moyen d'accouplement selon l'invention propose un dispositif complémentaire muni de faces à double inclinaisons pour supprimer les jeux axiaux entre le premier membre et le deuxième membre tout en bloquant radialement le premier membre par rapport au deuxième membre. Cette absence de mouvement tend à éviter la création d'un balourd et tend à minimiser l'usure des pièces mécaniques en l'absence de mouvement relatif entre le premier membre et le deuxième membre.

Une telle architecture n'a rien d'évident dans la mesure où cette architecture tend à interdire des désalignements entre le premier membre et le deuxième membre. Or, le moyen d'accouplement est originellement prévu pour autoriser ces désalignements. Néanmoins, la demanderesse note qu'une transmission mécanique comporte usuellement une pluralité de moyens d'accouplement. Dès lors, le blocage d'un moyen d'accouplement défectueux peut être toléré.

Par ailleurs, le passage du mode normal au mode de secours peut être évolutif. Par suite, les protubérances ne doivent pas nécessairement être dimensionnées pour supporter des chocs importants suite au passage du mode de fonctionnement normal au mode de secours.

En effet, la rupture d'un diaphragme ou de la liaison entre les diaphragmes peut être progressive, en ne se produisant pas soudainement.

Par exemple, un sur-couple peut occasionner un flambage progressif des diaphragmes se produisant avant une rupture en tant que telle. Ce flambage provoque un déplacement des protubérances par rapport aux faces d'appui. Dès lors, lorsque la rupture intervient, les protubérances ont déjà été déplacées par rapport aux faces d'appui ce qui induit une transition progressive entre le mode de fonctionnement normal et le mode de secours.

Une rupture d'une soudure entre le premier diaphragme et le deuxième diaphragme voire la rupture d'un diaphragme suite à un choc provoquant la propagation d'une crique peuvent conduire à un scénario similaire.

Par conséquent, l'invention permet d'obtenir un dispositif complémentaire relativement simple qui peut assister le dispositif principal de transmission du mouvement lors d'un mode de fonctionnement normal, et suppléer ce dispositif principal lors d'un mode de secours.

Le moyen d'accouplement peut de plus comporter une ou plusieurs des caractéristiques qui suivent.

Ainsi, chaque face à double inclinaisons s'étendant radialement à partir d'un cylindre d'un segment dit « segment inférieur » vers un segment dit « segment supérieur », chaque segment s'étendant circonférentiellement d'une première extrémité vers une deuxième extrémité, ladite première inclinaison décale axialement selon une direction parallèle à l'axe de rotation la première extrémité de chaque segment par rapport à la deuxième extrémité de ce segment.

Le terme « segment » désigne alors la portion d'une ligne droite ou courbe contenue entre une première extrémité et une deuxième extrémité.

Par ailleurs, un diaphragme peut être conique. L'expression « plan de référence » représente alors le plan contenant la périphérie externe du diaphragme à solidariser à un autre diaphragme.

Le segment inférieur d'une face à double inclinaisons est alors situé à l'interface entre un cylindre et la face à double inclinaisons. Autrement dit, une face à double inclinaisons s'étend radialement par rapport à un cylindre à partir d'un segment inférieur.

Le segment supérieur d'une face à double inclinaisons représente l'extrémité libre de cette face à double inclinaisons.

Dès lors, une droite dite « droite tangentielle » passant par la première extrémité d'un segment et un point du segment différant de cette première extrémité, la première inclinaison présente éventuellement un premier angle compris entre 15 degrés et 80 degrés en s'étendant entre cette droite tangentielle et le plan de référence.

Cette plage vise à obtenir le coincement requis et un certain effort de centrage.

De plus, une face à double inclinaisons peut être sensiblement plane en présentant une première inclinaison constante, à savoir identique pour tous les points du segment inférieur. Néanmoins, la première inclinaison peut être évolutive, deux points distincts du segment inférieur pouvant engendrer deux droites tangentielles différentes.

De même, chaque face à double inclinaisons s'étendant radialement à partir d'un cylindre d'un segment inférieur vers un segment supérieur, chaque segment s'étendant circonférentiellement d'une première extrémité vers une deuxième extrémité, ladite deuxième inclinaison décale le segment inférieur du segment supérieur axialement selon une direction parallèle à l'axe de rotation.

L'expression « deuxième inclinaison décale le segment inférieur du segment supérieur axialement » signifie qu'au moins un point du segment supérieur n'est pas situé selon le même rayon qu'un point du segment inférieur

En outre, le segment inférieur étant relié par une droite dite « droite en élévation » au segment supérieur dans un plan radial orthogonal à un plan de référence contenant le diaphragme du membre muni de ces segments, la deuxième inclinaison atteint une valeur comprise entre 15 degrés et 80 degrés en s'étendant entre ladite droite en élévation et ledit plan de référence.

Par ailleurs, une face à double inclinaisons peut être sensiblement plane en présentant une deuxième inclinaison constante, à savoir identique pour tous les points du segment inférieur. Néanmoins, la deuxième inclinaison peut être évolutive, deux points distincts du segment inférieur pouvant engendrer deux droites tangentielles différentes.

Par ailleurs, le premier cylindre et le deuxième cylindre peuvent être concentriques.

Une face interne d'un cylindre est alors en regard d'une face externe de l'autre cylindre, les protubérances et les faces d'appui s'étendant entre la face interne et la face externe. Le moyen d'accouplement est ainsi relativement compact. De plus, le premier membre et le deuxième membre sont alors correctement alignés l'un par rapport à l'autre.

En particulier, le deuxième cylindre peut être entouré par le premier cylindre.

Par ailleurs, le premier membre peut comporter au moins trois protubérances.

Trois protubérances sont au moins utilisées pour optimiser le centrage du premier membre par rapport au deuxième membre durant le mode de secours.

En outre, les protubérances peuvent être équiréparties circonférentiellement sur une circonférence du premier cylindre.

Cette caractéristique optimise aussi le centrage du premier membre par rapport au deuxième membre durant le mode de secours.

Selon un premier mode de réalisation, chaque deuxième face d'appui est une partie d'une unique saillie annulaire s'étendant radialement à partir du deuxième cylindre, chaque face de blocage étant parallèle à la saillie annulaire.

Un tel mode de réalisation tend à faciliter la fabrication du moyen d'accouplement.

De plus, la saillie annulaire est éventuellement décalée axialement par rapport au diaphragme du deuxième membre.

Selon un deuxième mode de réalisation, le deuxième membre comporte une pluralité d'excroissances radiales, chaque excroissance radiale étant en regard d'une butée et comprenant au moins une deuxième face d'appui.

Quel que soit le mode de réalisation, au moins une protubérance peut comporter deux faces de glissement se rejoignant éventuellement en formant une arête. De telles protubérances permettent le fonctionnement de l'invention selon deux sens de rotation du moyen d'accouplement. Eventuellement, une face de glissement est plus proche d'une première face d'appui que l'autre face de glissement selon un sens de rotation préférentiel.

De même, au moins une protubérance peut comporter deux faces de blocage se rejoignant éventuellement en formant une arête, chaque face de blocage étant une face à double inclinaisons.

En outre, au moins une butée peut comporter deux premières faces d'appui se rejoignant éventuellement en formant une arête.

Par ailleurs, le moyen d'accouplement comporte un premier dispositif de fixation réversible pour fixer une protubérance au premier membre, et/ou un deuxième dispositif de fixation réversible pour fixer une butée au deuxième membre.

Le dispositif complémentaire est alors amovible. De plus, ce dispositif complémentaire peut éventuellement être agencé sur un moyen d'accouplement existant. En outre, la fabrication des membres peut être facilitée.

Par ailleurs, selon un exemple de réalisation le moyen d'accouplement comporte :
- le premier membre muni du premier cylindre creux s'étendant axialement, une première base d'un premier diaphragme étant solidaire du premier cylindre,
- ledit deuxième membre muni du deuxième cylindre creux s'étendant axialement, une deuxième base d'un deuxième diaphragme étant solidaire du deuxième cylindre, une deuxième périphérie externe du deuxième diaphragme étant fixée à une première périphérie externe du premier diaphragme,
- une pluralité desdites protubérances solidaires du premier cylindre, chaque protubérance saillant dans un espace interne du moyen d'accouplement,
- une butée par protubérance, chaque butée étant solidaire dudit deuxième cylindre et saillant dans ledit espace interne, chaque protubérance étant coincée contre une butée et une deuxième face d'appui du deuxième membre en cas de rupture d'un diaphragme.

Outre un moyen d'accouplement, l'invention concerne une transmission mécanique tournante munie d'un premier organe tournant et d'un deuxième organe tournant. Cette transmission mécanique inclut alors au moins un moyen d'accouplement selon l'invention.

De plus, l'invention concerne un aéronef comportant une telle transmission mécanique.

L'invention et ses avantages apparaîtront avec plus de détails dans le cadre de la description qui suit avec des exemples donnés à titre illustratif en référence aux figures annexées qui représentent :
- la figure 1, une vue présentant un aéronef selon l'invention,
- les figures 2 à 6 et 8, des vues présentant un moyen d'accouplement selon un premier mode de réalisation,
- la figure 7, une vue en trois dimensions illustrant un deuxième mode de réalisation, et
- les figures 9 à 15, des vues illustrant le fonctionnement de du moyen d'accouplement indépendamment du mode de réalisation.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. Les termes « longitudinal » et « axial » sont relatifs à toute direction parallèle à la première direction X.

La deuxième direction Y est dite transversale. Enfin, la troisième direction Z est dite en élévation. L'expression « radial » est relative à toute direction parallèle à la deuxième direction Y ou à la troisième direction Z.

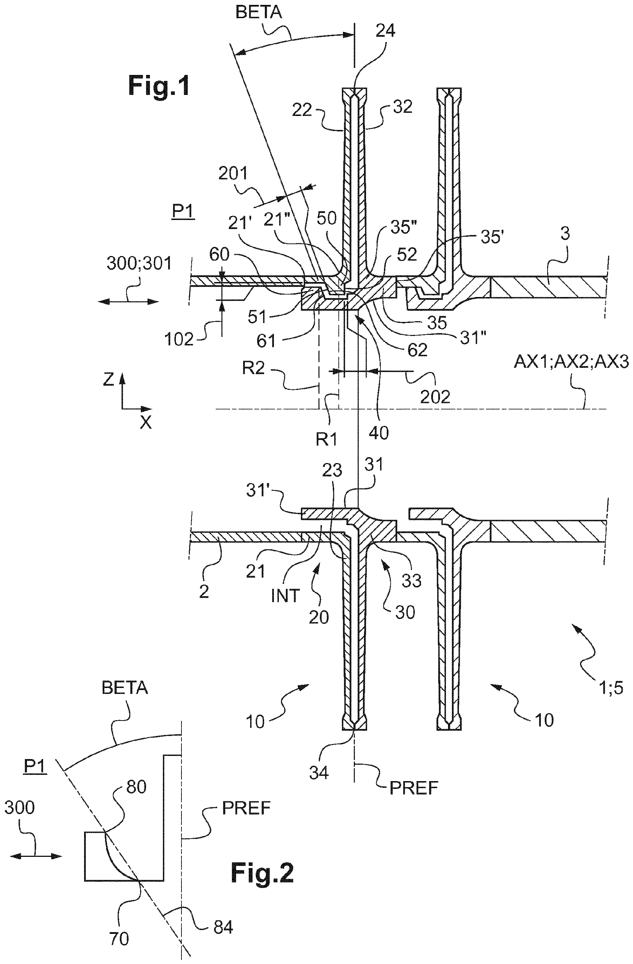

La figure 1 présente un aéronef 1 muni d'une transmission mécanique 5 apte à transmettre un couple et un mouvement rotatif. Les autres éléments de l'aéronef 1 ne sont pas représentés pour raison de concision.

La transmission mécanique 5 est pourvue d'un premier organe tournant 2 devant être relié mécaniquement à un deuxième organe tournant 3. Dès lors, la transmission mécanique 5 comporte au moins un moyen d'accouplement 10 interposé entre le premier organe tournant 2 et le deuxième organe tournant 3.

Chaque moyen d'accouplement 10 a pour fonction de relier mécaniquement le premier organe tournant 2 au deuxième organe tournant 3 en autorisant un décalage axial et angulaire entre ces organes tournants.

Dès lors, un moyen d'accouplement 10 selon l'invention comprend un premier membre 20 muni d'un premier diaphragme 22.

Plus précisément, le premier membre 20 représenté comporte un premier cylindre 21 cylindrique creux. Ce premier cylindre 21 s'étend longitudinalement d'une première extrémité distale 21' vers une première extrémité proximale 21" le long d'un premier axe de symétrie AX du premier membre 20.

Une première base annulaire 23 du premier diaphragme 22 est alors solidaire de la première extrémité proximale 21". Par exemple, cette base annulaire est soudée à la première extrémité proximale 21 ".

Le premier diaphragme a alors une forme annulaire en s'étendant radialement de sa première base annulaire 23 vers une première périphérie externe 24.

Par ailleurs, la première extrémité distale 21' du premier cylindre peut comprendre un premier moyen de fixation non visible sur la figure 1. Le premier moyen de fixation permet alors de solidariser le premier membre 20 à un organe tournant ou à un autre moyen d'accouplement. Selon l'exemple de la figure 1, le premier cylindre 21 est solidarisé au premier organe tournant 2.

De plus, le moyen d'accouplement 10 comprend un deuxième membre 30 muni d'un deuxième diaphragme 32.

Le deuxième membre 30 représenté comporte un corps 35 cylindrique creux. Ce corps 35 s'étend longitudinalement d'une terminaison distale 35' vers une terminaison proximale 35" le long d'un deuxième axe de symétrie AX2 du deuxième membre. En l'absence de désalignement, le moyen d'accouplement effectue un mouvement rotatif autour d'un axe de rotation AX3 confondu avec le premier axe de symétrie AX1 et le deuxième axe de symétrie AX2.

Par ailleurs, la terminaison proximale 35" du corps 35 peut comprendre un deuxième moyen de fixation non visible sur la figure 1. Le deuxième moyen de fixation permet alors de solidariser le deuxième membre 30 à un deuxième organe tournant ou à un autre moyen d'accouplement. Selon l'exemple de la figure 1, le corps 35 est solidarisé à un autre moyen d'accouplement.

En outre, une deuxième base annulaire 33 du deuxième diaphragme 32 est solidaire de la terminaison proximale 35". Par exemple, cette base annulaire est soudée à la terminaison proximale 35".

Le deuxième diaphragme a alors une forme annulaire en s'étendant radialement de sa deuxième base annulaire 33 vers une deuxième périphérie externe 34.

Dès lors, le moyen d'accouplement est muni d'un système de fixation pour lier la première périphérie externe 24 à la deuxième périphérie externe 34. Ce système de fixation peut inclure un cordon de soudure ou encore une pluralité de boulons par exemple.

La flexibilité des diaphragmes permet au mécanisme d'accouplement de tolérer un décalage axial et/ou angulaire entre le premier membre et le deuxième membre, et par suite entre deux organes tournants.

Par ailleurs, le deuxième membre 30 peut comporter un deuxième cylindre 31. Le deuxième cylindre prolonge le corps 35 axialement le long du deuxième axe de symétrie AX2 vers le premier membre. Le deuxième cylindre 31 s'étend donc axialement d'une extrémité 31" solidaire du corps et de la base du diaphragme vers une extrémité libre 31'.

Le deuxième cylindre 31 s'étend alors dans le premier cylindre 21, le deuxième cylindre 31 et le premier cylindre 21 étant concentriques en l'absence de désalignement.

Selon une alternative non représentée, le premier cylindre 21 s'étend dans le deuxième cylindre 31. Dès lors, le deuxième membre comporte uniquement le deuxième diaphragme et le deuxième cylindre, le deuxième cylindre s'étendant axialement du deuxième diaphragme pour être solidarisé à un organe tournant ou à autre moyen d'accouplement. Par contre, le premier membre comporte un corps solidaire du premier diaphragme et d'un organe tournant ou d'un autre moyen d'accouplement, le premier cylindre prolongeant ce corps axialement en s'étendant au sein du deuxième cylindre.

En résumé, selon l'alternative, le premier cylindre est agencé à l'intérieur du deuxième cylindre ou le premier cylindre entoure le deuxième cylindre.

Indépendamment de l'alternative, un espace dit « espace interne INT » sépare le premier cylindre 21 du deuxième cylindre 31 radialement.

Par ailleurs, le moyen d'accouplement 10 est muni d'un dispositif complémentaire 40 pouvant lier mécaniquement le premier membre 20 au deuxième membre 30.

Ce dispositif complémentaire comporte une pluralité de protubérances 50 agencées sur le deuxième membre 30. Chaque protubérance 50 s'étend radialement à partir du premier cylindre 21 dans l'espace interne INT.

Chaque protubérance 50 s'étend en outre axialement selon une direction 300 parallèle au premier axe de symétrie AX1 du premier cylindre. En particulier, chaque protubérance s'étend axialement d'une face dite « face de glissement 51 » vers une face dite « face de blocage 52 ».

De plus, le dispositif complémentaire comporte une pluralité de butées 60 agencées sur le deuxième membre 30. Chaque butée 60 s'étend radialement à partir du deuxième cylindre 31 dans l'espace interne INT.

Chaque butée 60 s'étend en outre axialement selon une direction 301 parallèle au deuxième axe de symétrie AX2 du deuxième cylindre. Chaque butée 60 comporte une première face d'appui 61. Chaque première face d'appui 61 peut alors coopérer avec une face de glissement 51 d'une protubérance. La première face d'appui 61 est alors en regard de la face de glissement 51 circonférentiellement et/ou axialement.

Par ailleurs, le deuxième membre 30 comporte au moins une face dite « deuxième face d'appui 62 » en regard circonférentiellement et/ou axialement d'une face de blocage 52 d'au moins une protubérance 50.

En outre, les faces de glissement 51 des protubérances 50 et les premières faces d'appui 61 des butées sont des faces à double inclinaisons, à savoir des faces présentant par exemple deux pentes distinctes. Eventuellement, les faces de blocage 52 et les deuxièmes faces d'appui 62 sont aussi des faces à double inclinaisons.

De telles faces à double inclinaisons présentent une première inclinaison et une deuxième inclinaison BETA avec un plan de référence PREF du diaphragme du membre muni de ces faces. Un tel plan de référence PREF peut représenter le plan dans lequel est inscrit la périphérie externe 24, 34 du diaphragme 22, 32 concerné. Le plan de référence PREF d'un membre est en outre orthogonal à l'axe de symétrie du membre.

En référence à la figure 2, chaque face à double inclinaisons s'étend radialement à partir d'un cylindre d'un segment inférieur 70 vers un segment supérieur 80. Le segment inférieur d'une face à double inclinaisons se situe à l'interface entre la face à double inclinaisons et le cylindre correspondant.

La deuxième inclinaison BETA permet alors de décaler le segment inférieur 70 du segment supérieur 80 axialement selon une direction 300 parallèle à l'axe de rotation du membre concerné. La deuxième inclinaison d'une face à double inclinaisons est élaborée pour tendre à éloigner radialement une protubérance du deuxième cylindre suite à une rotation relative du premier membre par rapport au deuxième membre.

En outre, le segment inférieur 70 peut être relié par une droite dite « droite en élévation 84 » au segment supérieur 80 dans un plan radial P1 correspondant au plan de la feuille sur la figure 2. Ce plan radial est orthogonal au plan de référence PREF contenant le diaphragme 22, 32 du membre 20, 30 muni de ces segments 70, 80. Dès lors, la deuxième inclinaison BETA atteint une valeur comprise entre 15 degrés et 80 degrés en s'étendant entre ladite droite en élévation et ledit plan de référence.

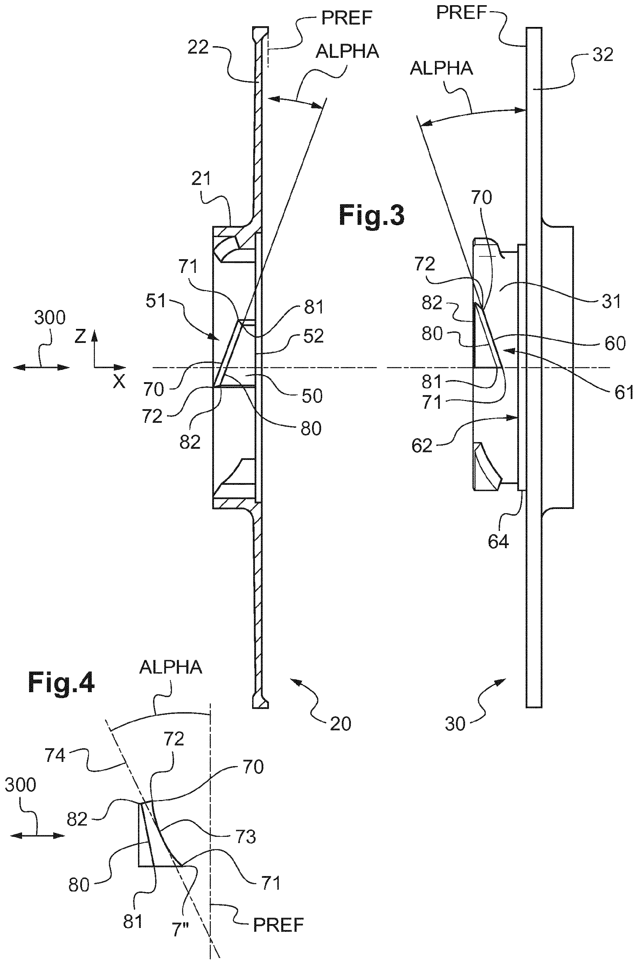

En référence à la figure 3, chaque segment 70, 80 s'étend en outre circonférentiellement d'une première extrémité 71, 81 vers une deuxième extrémité 72, 82.

La première inclinaison ALPHA décale alors axialement, selon une direction 300 parallèle à l'axe de symétrie du membre, la première extrémité 71, 81 de chaque segment 70, 80 par rapport à la deuxième extrémité 72, 82 de ce segment.

En référence à la figure 4, la première extrémité 71, 81 d'un segment 70, 80 représente le point du segment le plus proche du plan de référence PREF du membre 20, 30 muni de ce segment 70, 80.

Dès lors, pour chaque point 73 d'un segment, une droite dite « droite tangentielle 74 » passe par la première extrémité 71, 81 du segment et ce point 73. Pour ce point 73 du segment, la première inclinaison ALPHA atteint une valeur comprise entre 15 degrés et 80 degrés en s'étendant entre ladite droite tangentielle 74 et le plan de référence PREF.

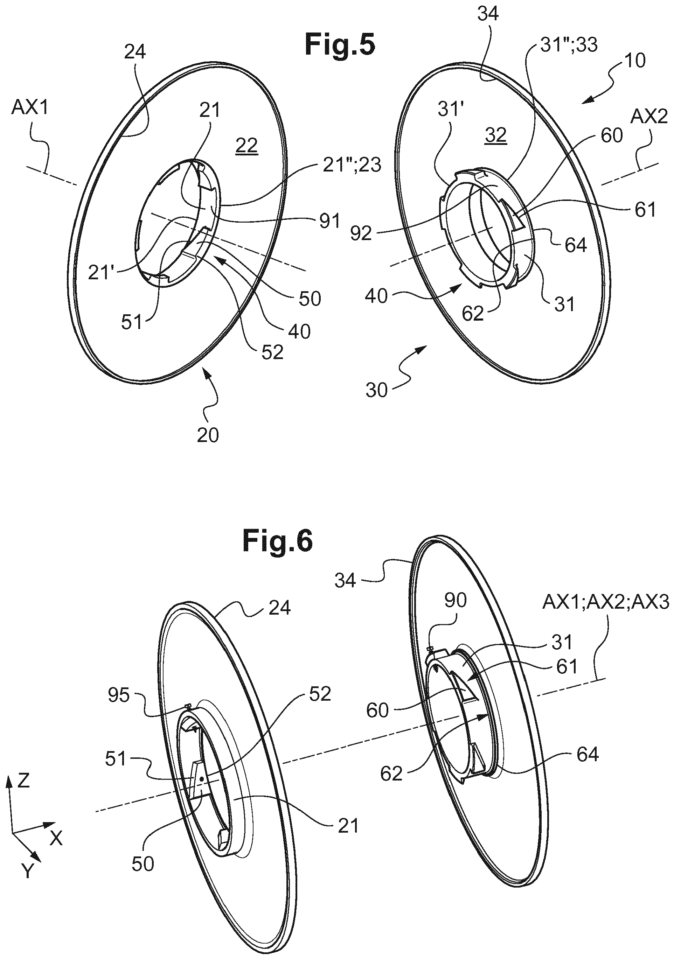

Par ailleurs et en référence à la figure 5, les protubérances 50 du premier membre sont réparties circonférentiellement sur une première paroi 91 annulaire du premier cylindre. Cette première paroi 91 est en regard d'une deuxième paroi 92 annulaire du deuxième cylindre. Les protubérances sont donc agencées le long d'un cercle.

Plus précisément, le premier membre comprend au moins trois protubérances 50, et en particulier cinq protubérances 50 selon la figure 5.

De plus, les protubérances 50 peuvent être équiréparties sur la circonférence du premier cylindre 21. Deux protubérances adjacentes sont donc séparées par un angle égal au quotient d'un angle 360 degrés et du nombre de protubérances, soit un angle de 72 degrés selon la figure 5.

De même, les butées 60 du deuxième membre 30 sont réparties circonférentiellement sur une deuxième paroi 92 annulaire du deuxième cylindre. Les butées 60 sont donc agencées le long d'un cercle.

Plus précisément, le deuxième membre comprend au moins cinq butées 60 selon la figure 5.

De plus, les butées 60 peuvent être équiréparties sur la circonférence du deuxième cylindre 31. Deux butées 60 adjacentes sont donc séparées par un angle égal au quotient d'un angle 360 degrés et du nombre de butées 60, soit un angle de 72 degrés selon la figure 5.

Par ailleurs et selon un premier mode de réalisation illustré sur la figure 5 notamment, chaque deuxième face d'appui 62 représente une partie d'une unique saillie annulaire 64.

Cette saillie annulaire s'étend radialement à partir dudit deuxième cylindre 31 sur toute la circonférence de ce deuxième cylindre.

Dès lors, chaque face de blocage 52 est parallèle à la saillie annulaire 64.

Eventuellement la saillie annulaire peut être conique et peut présenter la deuxième inclinaison BETA décrite précédemment.

Selon la variante de la figure 5 la saillie annulaire peut être une partie du deuxième diaphragme 32.

Selon la variante de la figure 6, la saillie annulaire 64 est décalée axialement par rapport au deuxième diaphragme 32 du deuxième membre 30. La saillie annulaire prend alors la forme d'un épaulement.

Indépendamment du mode de réalisation, la figure 6 illustre un moyen d'accouplement comprenant un premier dispositif de fixation 95 réversible pour fixer une protubérance 50 au premier membre 20, tel qu'un moyen de vissage par exemple. De même, Un deuxième dispositif de fixation 90 réversible peut fixer au moins une butée au deuxième membre 30.

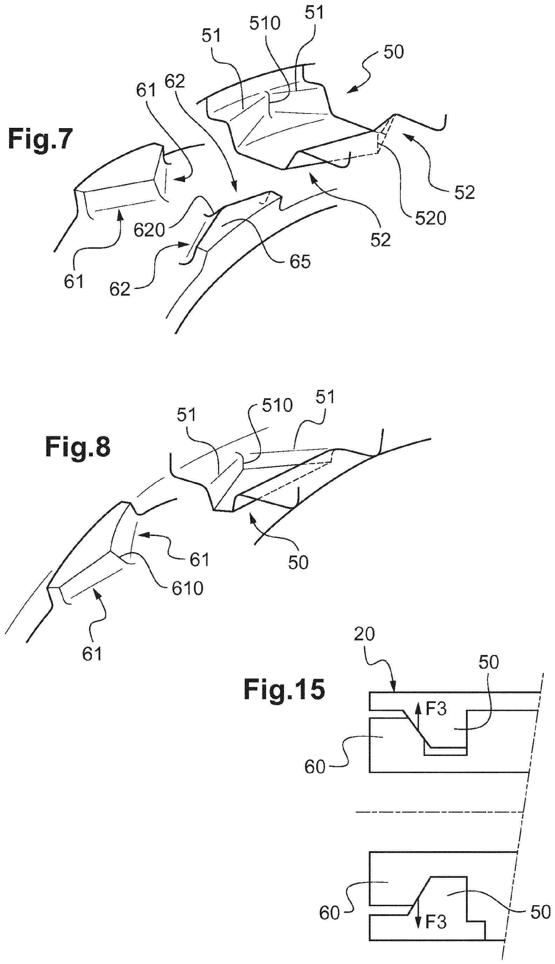

Selon le deuxième mode de réalisation illustré sur la figure 7, le deuxième membre 30 comporte une pluralité d'excroissances radiales 65. Chaque excroissance radiale 65 est en regard d'une butée 60 en étant décalée axialement par rapport à cette butée.

Dès lors, l'excroissance radiale est munie d'au moins une deuxième face d'appui 62. La figure 7 illustre une excroissance radiale munie de deux deuxièmes faces d'appui 62.

Par ailleurs et indépendamment du mode de réalisation, au moins une protubérance 50 peut comporter deux faces de glissement 51 distinctes se rejoignant en formant une arête 510. De même, au moins une protubérance 50 peut comporter deux faces de blocage 52 distinctes se rejoignant en formant une arête 520, chaque face de blocage 52 étant une face à double inclinaisons.

Par suite, au moins une butée 60 peut comporter deux premières faces d'appui 61 distinctes se rejoignant en formant une arête 610. Le cas échéant, une excroissance radiale peut comporter deux deuxièmes faces d'appui 61.

Par conséquent, la figure 7 illustre un moyen d'accouplement selon le deuxième mode de réalisation qui est muni de butées comprenant deux premières surfaces d'appui, de protubérances comportant deux faces de glissement et deux faces de blocage, et d'excroissances radiales munies de deux deuxièmes faces d'appui.

La figure 8 illustre alors un moyen d'accouplement selon le premier mode de réalisation muni de butées comprenant deux premières surfaces d'appui, d'une saillie annulaire, et des protubérances comportant deux faces de glissement et une face de blocage.

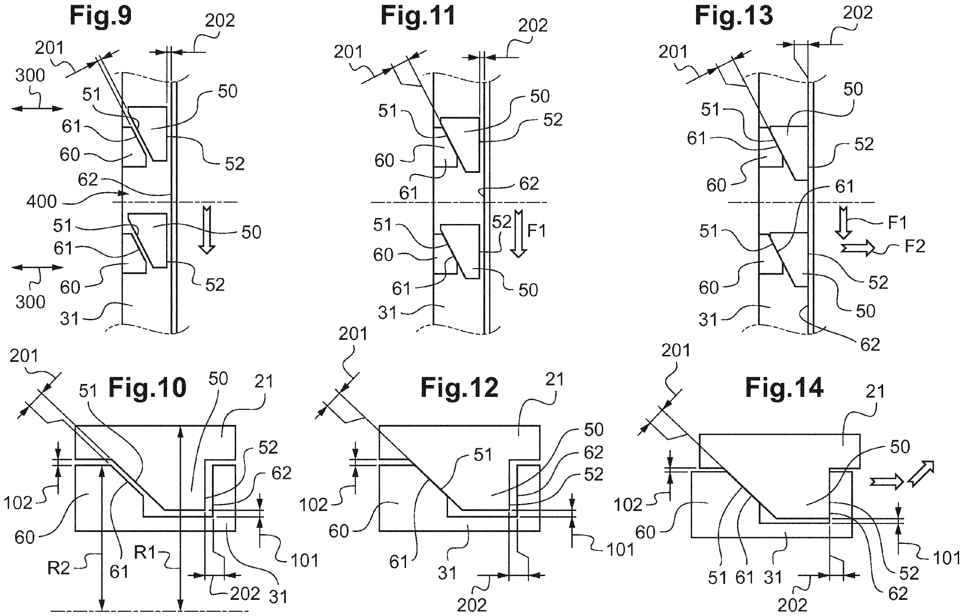

Les figures 9 à 14 illustrent le fonctionnement de l'invention.

En référence à la figure 9, durant un mode de fonctionnement normal, les protubérances 50 du premier membre ne sont pas en contact avec le deuxième membre.

Selon la figure 9, chaque protubérance peut être disposée axialement entre une première face d'appui 61 et une deuxième face d'appui 62.

Néanmoins, une protubérance peut être agencée dans l'interstice séparant circonférentiellement deux butées 60.

Quel que soit l'agencement des protubérances 50, un premier jeu axial 201 sépare chaque protubérance 50 d'une première face d'appui 61 d'une butée 60 selon une direction axiale 300 parallèle à l'axe de rotation AX3 du premier membre 20 et du deuxième membre 30. De même, un deuxième jeu axial 202 sépare chaque face de blocage 52 d'une protubérance et une deuxième face d'appui 62

En outre et en référence à la figure 10, un premier jeu radial 101 sépare chaque protubérance 50 du deuxième membre 30 selon une direction passant par un rayon R1 du premier cylindre 21. De plus, un deuxième jeu radial 102 séparant chaque face d'appui du premier membre 20 selon une direction passant par un rayon R2 du deuxième cylindre 31.

En référence la figure 11, lors d'une rupture d'un diaphragme ou de la liaison entre les diaphragmes, les protubérances 50 effectuent un mouvement de rotation par rapport aux butées 60 selon la flèche F1.

Ce mouvement relatif peut être progressif. En effet, les diaphragmes peuvent se déformer avant que la rupture en tant que telle intervienne. Une telle déformation tend à engendrer un mouvement relatif des protubérances par rapport aux butées.

Dès lors, la face de glissement d'une protubérance entre en contact contre la première face d'appui 61.

En référence à la figure 12, le premier jeu axial 201 est alors annulé.

De plus et en référence à la figure 13, la première inclinaison de la première face d'appui 61 et de la face de glissement tend à déplacer axialement selon la flèche F2 la protubérance vers la deuxième face d'appui 62. La protubérance reste néanmoins accolée à la première face d'appui 61.

En référence à la figure 14, le premier jeu axial 201 et le deuxième jeu axial 202 sont alors annulés.

Par contre, les jeux radiaux sont conservés.

En effet et en référence à la figure 15, la deuxième inclinaison tend à générer des efforts radiaux sur les protubérances, ces efforts radiaux étant illustrés par des flèches F3.

Le moyen d'accouplement comprenant plusieurs protubérances, les efforts radiaux permettent de centrer le premier membre par rapport au deuxième membre en conservant les jeux radiaux.

Chaque protubérance du premier membre est alors coincée par rapport au deuxième membre et permet la transmission d'un couple et d'un mouvement entre le premier membre et le deuxième membre.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Moyen d'accouplement (10) muni d'un premier membre (20) apte à être fixé à un premier organe tournant (2) et d'un deuxième membre (30) apte à être fixé à un deuxième organe tournant (3), le premier membre (20) étant pourvu d'un premier diaphragme (22) et le deuxième membre (30) étant pourvu d'un deuxième diaphragme (32) qui est solidarisé au premier diaphragme (22) pour autoriser un décalage entre le premier organe tournant (2) et le deuxième membre (30), le moyen d'accouplement (10) incluant un dispositif complémentaire (40) de transmission de couple pour au moins lier le premier membre (20) au deuxième membre (30) en cas de rupture d'au moins un diaphragme (22, 32) ou d'une liaison entre les diaphragmes (22, 32),
ledit dispositif complémentaire (40) comportant au moins une pluralité de protubérances (50) réparties circonférentiellement sur un premier cylindre (21) du premier membre (20) et une pluralité de butées (60) réparties circonférentiellement sur un deuxième cylindre (31) du deuxième membre (30),
**caractérisé en ce que**
chaque protubérance (50) présente au moins une face à double inclinaisons dite « face de glissement (51) » en regard d'une face à double inclinaisons d'une butée (60) dite « première face d'appui (61) », chaque protubérance (50) présentant une face dite « face de blocage (52) » en regard d'un face dite « deuxième face d'appui (62) » du deuxième membre (30), et
**en ce qu'**en l'absence de ladite rupture, un premier jeu radial (101) sépare chaque protubérance (50) du deuxième membre (30) selon une direction passant par un rayon (R1) du premier cylindre (21) et un deuxième jeu radial (102) séparant chaque face d'appui du premier membre (20) selon une direction passant par un rayon (R2) du deuxième cylindre (31), un premier jeu axial (201) séparant chaque protubérance (50) d'une première face d'appui (61) et un deuxième jeu axial (202) séparant chaque face de blocage (52) d'une deuxième face d'appui (62) selon une direction axiale (300) parallèle à un axe de rotation (AX3) du premier membre (20) et du deuxième membre (30), et
**en ce que** chaque face à double inclinaisons présente une première inclinaison (ALPHA) pour permettre le coincement d'une protubérance (50) entre une première face d'appui (61) et une deuxième face d'appui (62) en annulant lesdits jeux axiaux (201, 202) suite à une rotation relative des protubérances (50) par rapport aux faces d'appui (61, 62) autour dudit axe de rotation (AX3) en cas d'une dite rupture, chaque face à double inclinaisons présentant une deuxième inclinaison (BETA) pour centrer ledit première cylindre (21) par rapport au deuxième cylindre (31) suite à ladite rotation relative.

2. Moyen d'accouplement selon la revendication 1,
**caractérisé en ce que**, chaque face à double inclinaisons s'étendant radialement à partir d'un cylindre d'un segment dit « segment inférieur (70) » vers un segment dit « segment supérieur (80) », chaque segment (70, 80) s'étendant circonférentiellement d'une première extrémité (71, 81) vers une deuxième extrémité (72, 82), ladite première inclinaison (ALPHA) décale axialement selon une direction parallèle à l'axe de rotation la première extrémité (71, 81) de chaque segment (70, 80) par rapport à la deuxième extrémité (72, 82) de ce segment.

3. Moyen d'accouplement selon la revendication 1, **caractérisé en ce que**, la première extrémité (71, 81) d'un segment (70, 80) représentant le point du segment le plus proche d'un plan de référence (PREF) contenant le diaphragme (22, 32) du membre (20, 30) muni de ce segment (70, 80), une droite dite « droite tangentielle (74) » passant par ladite première extrémité (71, 81) et un point (73) du segment différant de cette première extrémité (71, 81), la première inclinaison (ALPHA) atteint une valeur comprise entre 15 degrés et 80 degrés en s'étendant entre ladite droite tangentielle (74) et ledit plan de référence (PREF).

4. Moyen d'accouplement selon l'une quelconque des revendications 1 à 3,
**caractérisé en ce que**, chaque face à double inclinaisons s'étendant radialement à partir d'un cylindre d'un segment dit « segment inférieur (70) » vers un segment dit « segment supérieur (80) », chaque segment (70, 80) s'étendant circonférentiellement d'une première extrémité (71, 81) vers une deuxième extrémité (72, 82), ladite deuxième inclinaison (BETA) décale le segment inférieur (70) du segment supérieur (80) axialement selon une direction parallèle à l'axe de rotation.

5. Moyen d'accouplement selon la revendication 4,
**caractérisé en ce que**, le segment inférieur (70) étant relié par une droite dite « droite en élévation (84) » au segment supérieur (80) dans un plan radial (P1) orthogonal à un plan de référence (PREF) contenant le diaphragme (22, 32) du membre (20, 30) muni de ces segments (70, 80), la deuxième inclinaison (BETA) atteint une valeur comprise entre 15 degrés et 80 degrés entre ladite droite en s'étendant en élévation et ledit plan de référence.

6. Moyen d'accouplement selon l'une quelconque des revendications 1 à 5,
**caractérisé en ce que** ledit premier cylindre (21) et ledit deuxième cylindre (31) sont concentriques.

7. Moyen d'accouplement selon l'une quelconque des revendications 1 à 6,
**caractérisé en ce que** ledit deuxième cylindre (31) est entouré par ledit premier cylindre (21).

8. Moyen d'accouplement selon l'une quelconque des revendications 1 à 7,
**caractérisé en ce que** ledit premier membre (20) comporte au moins trois protubérances (50).

9. Moyen d'accouplement selon l'une quelconque des revendications 1 à 8,
**caractérisé en ce que** lesdites protubérances (50) sont équiréparties circonférentiellement sur une circonférence du premier cylindre (21).

10. Moyen d'accouplement selon l'une quelconque des revendications 1 à 9,
**caractérisé en ce que** chaque deuxième face d'appui (62) est une partie d'une unique saillie annulaire (64) s'étendant radialement à partir dudit deuxième cylindre (31), chaque face de blocage (52) étant parallèle à ladite saillie annulaire (64).

11. Moyen d'accouplement selon la revendication 10,
**caractérisé en ce que** ladite saillie annulaire (64) est décalée axialement par rapport au deuxième diaphragme (32) du deuxième membre (30).

12. Moyen d'accouplement selon l'une quelconque des revendications 1 à 9,
**caractérisé en ce que** ledit deuxième membre (30) comporte une pluralité d'excroissances radiales (65), chaque excroissance radiale (65) étant en regard d'une butée (60) et comprenant au moins une deuxième face d'appui (62).

13. Moyen d'accouplement selon l'une quelconque des revendications 1 à 12,
**caractérisé en ce qu'**au moins une protubérance (50) comporte deux faces de glissement (51).

14. Moyen d'accouplement selon l'une quelconque des revendications 1 à 13,
**caractérisé en ce qu'**au moins une protubérance (50) comporte deux faces de blocage (52), chaque face de blocage (52) étant une face à double inclinaisons.

15. Moyen d'accouplement selon l'une quelconque des revendications 1 à 14,
**caractérisé en ce qu'**au moins une butée (60) comporte deux premières faces d'appui (61).

16. Moyen d'accouplement selon l'une quelconque des revendications 1 à 15,
**caractérisé en ce que** le moyen d'accouplement (10) comporte un premier dispositif de fixation (95) réversible pour fixer une protubérance (50) au premier membre (20), et/ou un deuxième dispositif de fixation (90) réversible pour fixer une butée au deuxième membre (30).

17. Moyen d'accouplement selon l'une quelconque des revendications 1 à 16,
**caractérisé en ce que** le moyen d'accouplement (10) comporte :
- ledit premier membre (20) muni du premier cylindre creux s'étendant axialement, une première base (23) d'un premier diaphragme (22) étant solidaire du premier cylindre (21),
- ledit deuxième membre (30) muni du deuxième cylindre (31) creux s'étendant axialement, une deuxième base (33) d'un deuxième diaphragme (32) étant solidaire du deuxième cylindre (22), une deuxième périphérie externe (34) du deuxième diaphragme (32) étant fixée à une première périphérie externe (24) du premier diaphragme (22),
- une pluralité desdites protubérances (50) solidaires du premier cylindre (21), chaque protubérance (50) saillant dans un espace interne (INT) du moyen d'accouplement,
- une butée (60) par protubérance (50), chaque butée étant solidaire dudit deuxième cylindre et saillant dans ledit espace interne (INT), chaque protubérance (50) étant coincée contre une butée et une deuxième face d'appui du deuxième membre en cas de rupture d'un diaphragme (22, 32).

18. Transmission mécanique (5) tournante munie d'un premier organe tournant (2) et d'un deuxième organe tournant (3),
**caractérisée en ce que** la transmission mécanique (5) inclut au moins un moyen d'accouplement (10) selon l'une quelconque des revendications 1 à 17.

19. Aéronef (1),
**caractérisé en ce que** ledit aéronef comporte une transmission mécanique (5) selon la revendication 18.

## Patentansprüche

1. Kupplungsmittel (10), welches mit einem ersten Bauteil (20) versehen ist, welches an einem ersten sich drehenden Element (2) befestigt werden kann, und mit einem zweiten Bauteil (30), das an einem zweiten sich drehenden Element (3) befestigt werden kann, wobei das erste Bauteil (20) mit einer ersten Federplatte (22) und das zweite Bauteil (30) mit einer zweiten Federplatte (32) versehen ist, die an der ersten Federplatte (22) befestigt ist, um eine Verschiebung zwischen dem ersten sich drehenden Element (2) und dem zweiten Bauteil (30) zu erlauben, wobei das Kupplungsmittel (10) eine komplementäre Vorrichtung (40) zur Übertragung eines Drehmoments umfasst, um mindestens das erste Bauteil (20) mit dem zweiten Bauteil (30) im Falle eines Bruchs mindestens einer Federplatte (22, 32) oder einer Verbindung zwischen den Federplatten (22, 32) zu verbinden,
wobei die komplementäre Vorrichtung (40) mindestens eine Mehrzahl von Vorwölbungen (50), die umfangsmäßig auf einem ersten Zylinder (21) des ersten Bauteils (20) verteilt sind, und eine Mehrzahl von Anschlägen (60), die umfangsmäßig auf einem zweiten Zylinder (31) des zweiten Bauteils (30) verteilt sind, aufweist, **dadurch gekennzeichnet, dass** jede Vorwölbung (50) mindestens eine Fläche mit zwei Neigungen aufweist, die "Gleitfläche (51)" genannt wird, gegenüber einer Fläche mit zwei Neigungen eines Anschlags (60), die "erste Andruckfläche (61)" genannt wird, wobei jede Vorwölbung (50) eine Fläche aufweist, die "Blockierfläche (52)" genannt wird, gegenüber einer Fläche, die "zweite Andruckfläche (62)" des zweiten Bauteils (30) genannt wird, und
dadurch, dass bei dem Nichtvorliegen des Bruches ein erstes radiales Spiel (101) jede Vorwölbung (50) des zweiten Bauteils (30) in einer Richtung voneinander trennt, die durch einen Radius (R1) des ersten Zylinders (21) verläuft, und ein zweites radiales Spiel (102) jede Andruckfläche des ersten Bauteils (20) in einer Richtung voneinander trennt, die durch einen Radius (R2) des zweiten Zylinders (31) verläuft, ein erstes axiales Spiel (201) jede Vorwölbung (50) von einer ersten Andruckfläche (61) trennt, und ein zweites axiales Spiel (202) jede Blockierfläche (52) einer zweiten Andruckfläche (62) in einer axialen Richtung (300) trennt, die parallel zu einer Drehachse (AX3) des ersten Bauteils (20) und des zweiten Bauteils (30) verläuft, und
dadurch, dass jede Fläche mit zwei Neigungen eine erste Neigung (ALPHA) aufweist, um das Klemmen einer Vorwölbung (50) zwischen einer ersten Andruckfläche (61) und einer zweiten Andruckfläche (62) zu erlauben, indem die beiden axialen Spiele (201, 202) infolge einer Relativdrehung der Vorwölbungen (50) relativ zu den Andruckflächen (61, 62) um die Drehachse (AX3) im Falle des Bruches aufgehoben werden, wobei jede Fläche mit zwei Neigungen eine zweite Neigung (BETA) aufweist, um den ersten Zylinder (21) bezüglich des zweiten Zylinders (31) nach der Relativdrehung zu zentrieren.

2. Kupplungsmittel nach Anspruch 1,
**dadurch gekennzeichnet, dass** jede Fläche mit zwei Neigungen sich radial ausgehend von einem Zylinder eines "innerer Abschnitt (70)" genannten Abschnitts zu einem "oberer Abschnitt (80)" genannten Abschnitt erstreckt, wobei jeder Abschnitt (70, 80) sich in Umfangsrichtung von einem ersten Ende (71, 81) zu einem zweiten Ende (72, 82) erstreckt, wobei die erste Neigung (ALPHA) das erste Ende (71, 81) eines jeden Abschnitts (70, 80) gegenüber dem zweiten Ende (72, 82) dieses Abschnitts entlang einer Richtung, die parallel zu der Drehachse verläuft, axial versetzt.

3. Kupplungsmittel nach Anspruch 1,
**dadurch gekennzeichnet, dass** das erste Ende (71, 81) eines Abschnitts (70, 80) den Punkt des Abschnitts darstellt, der einer Bezugsebene (PREF) am nächsten liegt, der die Federplatte (22, 32) des Bauteils (20, 30) enthält, das mit diesem Abschnitt (70, 80) versehen ist, wobei eine Gerade, die "tangentiale Gerade (74)" genannt wird, durch das erste Ende (71, 81) verläuft und durch einen Punkt (73) des Abschnitts, der von dem ersten Ende (71, 81) verschieden ist, wobei die erste Neigung (ALPHA) einen Wert erreicht, der zwischen 15 Grad und 80 Grad liegt und sich zwischen der ersten tangentialen Geraden (74) und der Bezugsebene (PREF) erstreckt.

4. Kupplungsmittel nach einem der Ansprüche 1 bis 3,
**dadurch gekennzeichnet, dass** jede Fläche mit zwei Neigungen sich radial ausgehend von einem "unterer Abschnitt (70)" genannten Abschnitt zu einem "oberer Abschnitt (80)" genannten Abschnitt erstreckt, wobei sich jeder Abschnitt (70, 80) in Umfangsrichtung von einem ersten Ende (71, 81) zu einem zweiten Ende (72, 82) erstreckt, wobei die zweite Neigung (BETA) den unteren Abschnitt (70) gegenüber dem oberen Abschnitt (80) axial in einer zur Drehachse parallelen Richtung versetzt.

5. Kupplungsmittel nach Anspruch 4,
**dadurch gekennzeichnet, dass** der untere Abschnitt (70) durch eine "Gerade in Höhenrichtung (84)" genannte Gerade mit dem oberen Abschnitt (80) in einer radialen Ebene (P1), die senkrecht zu einer Bezugsebene (PREF), die die Federplatte (22, 32) des Bauteils (20, 30) enthält, welches mit diesen Abschnitten (70, 80) versehen ist, verbunden ist, wobei die zweite Neigung (BETA) einen Wert zwischen 15 Grad und 80 Grad erreicht zwischen der Geraden und der Bezugsebene, wobei sie sich in Höhenrichtung erstreckt.

6. Kupplungsmittel nach einem der Ansprüche 1 bis 5,
**dadurch gekennzeichnet, dass** der erste Zylinder (21) und der zweite Zylinder (31) konzentrisch sind.

7. Kupplungsmittel nach einem der Ansprüche 1 bis 6,
**dadurch gekennzeichnet, dass** der zweite Zylinder (31) von dem ersten Zylinder (21) umgeben wird.

8. Kupplungsmittel nach einem der Ansprüche 1 bis 7,
**dadurch gekennzeichnet, dass** das erste Bauteil (20) mindestens drei Vorwölbungen (50) aufweist.

9. Kupplungsmittel nach einem der Ansprüche 1 bis 8,
**dadurch gekennzeichnet, dass** die Vorwölbungen (50) umfangsmäßig gleich verteilt auf einem Umfang des ersten Zylinders (21) angeordnet sind.

10. Kupplungsmittel nach einem der Ansprüche 1 bis 9,
**dadurch gekennzeichnet, dass** jede zweite Andruckfläche (62) ein Teil eines einzigen ringförmigen Vorsprungs (64) ist, der sich radial ausgehend von dem zweiten Zylinder (31) erstreckt, wobei jede Blockierfläche (52) parallel zu dem ringförmigen Vorsprung (64) verläuft.

11. Kupplungsmittel nach Anspruch 10,
**dadurch gekennzeichnet, dass** der ringförmige Vorsprung (64) axial gegenüber der zweiten Federplatte (32) des zweiten Bauteils (30) versetzt ist.

12. Kupplungsmittel nach einem der Ansprüche 1 bis 9,
**dadurch gekennzeichnet, dass** das zweite Bauteil (30) eine Mehrzahl radialer Fortsätze (65) aufweist, wobei jeder radiale Fortsatz (65) gegenüber einem Anschlag (60) liegt und mindestens eine zweite Andruckfläche (62) aufweist.

13. Kupplungsmittel nach einem der Ansprüche 1 bis 12,
**dadurch gekennzeichnet, dass** mindestens eine Vorwölbung (50) zwei Gleitflächen (51) aufweist.

14. Kupplungsmittel nach einem der Ansprüche 1 bis 13,
**dadurch gekennzeichnet, dass** mindestens eine Vorwölbung (50) zwei Blockierflächen (52) aufweist, wobei jede Blockierfläche (52) eine Fläche mit zwei Neigungen ist.

15. Kupplungsmittel nach einem der Ansprüche 1 bis 14,
**dadurch gekennzeichnet, dass** mindestens ein Anschlag (60) zwei erste Andruckflächen (61) aufweist.

16. Kupplungsmittel nach einem der Ansprüche 1 bis 15,
**dadurch gekennzeichnet, dass** das Kupplungsmittel (10) eine erste Vorrichtung (95) zur lösbaren Befestigung aufweist, um eine Vorwölbung (50) an dem ersten Bauteil (20) zu befestigen, und/oder eine zweite Vorrichtung (90) zur lösbaren Befestigung, um einen Anschlag an dem zweiten Bauteil (30) zu befestigen.

17. Kupplungsmittel nach einem der Ansprüche 1 bis 16,
**dadurch gekennzeichnet, dass** das Kupplungsmittel (10) aufweist:
- das erste Bauteil (20) mit dem ersten Hohlzylinder, der sich in Axialrichtung erstreckt, wobei ein erster Sockel (23) einer ersten Federplatte (22) mit dem ersten Zylinder (21) fest verbunden ist,
- das zweite Bauteil (30), das mit dem zweiten Hohlzylinder (31) versehen ist, der sich in Axialrichtung erstreckt, wobei ein zweiter Sockel (33) einer zweiten Federplatte (32) mit dem zweiten Zylinder (22) fest verbunden ist, wobei ein zweiter Außenumfang (34) der zweiten Federplatte (32) an einem ersten Außenumfang (24) der ersten Federplatte (22) befestigt ist,
- eine Mehrzahl der Vorwölbungen (50), die mit dem ersten Zylinder (21) fest verbunden sind, wobei jede Vorwölbung (50) in einen Innenraum (INT) des Kupplungsmittels vorsteht,
- einen Anschlag (60) pro Vorwölbung (50), wobei jeder Anschlag mit dem zweiten Zylinder fest verbunden ist und in den Innenraum (INT) vorsteht, wobei jede Vorwölbung (50) gegen einen Anschlag und eine zweite Andruckfläche des zweiten Bauteils im Falle des Bruchs einer Federplatte (22, 32) geklemmt ist.

18. Sich drehendes mechanisches Getriebe (5) mit einem ersten sich drehenden Element (2) und einem zweiten sich drehenden Element (3),
**dadurch gekennzeichnet, dass** das mechanische Getriebe (5) mindestens ein Kupplungsmittel (10) nach einem der Ansprüche 1 bis 17 aufweist.

19. Luftfahrzeug (1).
**dadurch gekennzeichnet, dass** das Luftfahrzeug ein mechanisches Getriebe (5) nach Anspruch 18 aufweist.

## Claims

1. Coupling means (10) provided with a first member (20) suitable for being fastened to a first rotary unit (2) and a second member (30) suitable for being fastened to a second rotary unit (3), the first member (20) being provided with a first diaphragm (22) and the second member (30) being provided with a second diaphragm (32) which is secured to the first diaphragm (22) in order to allow shifting between the first rotary unit (2) and the second member (30), the coupling means (10) including a complementary torque transmission device (40) for at least connecting the first member (20) to the second member (30) in the event of rupture of at least one diaphragm (22, 32) or of a connection between the diaphragms (22, 32), said complementary device (40) comprising at least one plurality of protrusions (50) distributed circumferentially on a first cylinder (21) of the first member (20) and a plurality of abutments (60) distributed circumferentially on a second cylinder (31) of the second member (30),
**characterised in that** each protrusion (50) has at least one face with two inclinations referred to as a "sliding face (51)" facing a face with two inclinations of an abutment (60) referred to as a "first bearing face (61)", each protrusion (50) having a face referred to as a "blocking face (52)" facing a face referred to as a "second bearing face (62)" of the second member (30), and
**in that** in the absence of said rupture, a first radial clearance (101) separates each protrusion (50) from the second member (30) in a direction passing via a radius (R1) of the first cylinder (21) and a second radial clearance (102) separating each bearing face from the first member (20) in a direction passing via a radius (R2) of the second cylinder (31), a first axial clearance (201) separating each protrusion (50) from a first bearing face (61) and second axial clearance (202) separating each blocking face (52) from a second bearing face (62) in an axial direction (300) parallel to an axis of rotation (AX3) of the first member (20) and of the second member (30), and
**in that** each face with two inclinations has a first inclination (ALPHA) to enable the wedging of a protrusion (50) between a first bearing face (61) and a second bearing face (62) by eliminating said axial clearances (201, 202) following a relative rotation of the protrusions (50) with respect to the bearing faces (61, 62) about said axis of rotation (AX3) in the event of a said rupture, each face with two inclinations having a second inclination (BETA) for centring said first cylinder (21) with respect to the second cylinder (31) following said relative rotation.

2. Coupling means according to claim 1,
**characterised in that**, each face with two inclinations extending radially from a cylinder of a segment referred to as a "bottom segment (70)" towards a segment referred to as a "top segment (80)", each segment (70, 80) extending circumferentially from a first end (71, 81) towards a second end (72, 82), said first inclination (ALPHA) shifts the first end (71, 81) of each segment (70, 80) with respect to the second end (72, 82) of this segment axially in a direction parallel to the axis of rotation.

3. Coupling means according to claim 1,
**characterised in that**, the first end (71, 81) of a segment (70, 80) representing the point of the segment closest to a reference plane (PREF) containing the diaphragm (22, 23) of the member (20, 30) provided with this segment (70, 80), a straight line referred to as a "tangential line (74)" passing via said first end (71, 81) and a point (73) of the segment differing from the first end (71, 81), the first inclination (ALPHA) reaches a value comprised between 15 degrees and 80 degrees extending between said tangential straight line (74) and said reference plane (PREF).

4. Coupling means according to any one of claims 1 to 3,
**characterised in that**, each face with two inclinations extending radially from a cylinder of a segment referred to as a "bottom segment (70)" towards a segment referred to as a "top segment (80)", each segment (70, 80) extending circumferentially from a first end (71, 81) towards a second end (72, 82), said second inclination (BETA) shifts the bottom segment (70) from the top segment (80) axially in a direction parallel to the axis of rotation.

5. Coupling means according to claim 4,
**characterised in that**, the bottom segment (70) being connected by a straight line referred to as a " straight line in elevation (84)" to the top segment (80) in a radial plane (P1) orthogonal to a reference plane (PREF) containing the diaphragm (22, 32) of the member (20, 30) provided with these segments (70, 80), the second inclination (BETA) reaches a value comprised between 15 degrees and 80 degrees between said straight line extending in elevation and said reference plane.

6. Coupling means according to any one of claims 1 to 5,
**characterised in that** said first cylinder (21) and said second cylinder (31) are concentric.

7. Coupling means according to any one of claims 1 to 6,
**characterised in that** said second cylinder (31) is surrounded by said first cylinder (21).

8. Coupling means according to any one of claims 1 to 7,
**characterised in that** said first member (20) comprises at least three protrusions (50).

9. Coupling means according to any one of claims 1 to 8,
**characterised in that** said protrusions (50) are uniformly distributed circumferentially on a circumference of the first cylinder (21).

10. Coupling means according to any one of claims 1 to 9,
**characterised in that** each second bearing face (62) is a portion of a single annular projection (64) extending radially from said second cylinder (31), each blocking face (52) being parallel to said annular projection (64).

11. Coupling means according to claim 10,
**characterised in that** said annular projection (64) is shifted axially with respect to the second diaphragm (32) of the second member (30).

12. Coupling means according to any one of claims 1 to 9,
**characterised in that** said second member (30) comprises a plurality of radial excrescences (65), each radial excrescence (65) facing an abutment (60) and comprising at least one second bearing face (62).

13. Coupling means according to any one of claims 1 to 12,
**characterised in that** at least one protrusion (50) comprises two sliding faces (51).

14. Coupling means according to any one of claims 1 to 13,
**characterised in that** at least one protrusion (50) comprises two blocking faces (52), each blocking face (52) being a face with two inclinations.

15. Coupling means according to any one of claims 1 to 14,
**characterised in that** at least one abutment (60) comprises two first bearing faces (61).

16. Coupling means according to any one of claims 1 to 15,
**characterised in that** the coupling means (10) comprises a first reversible fastening device (95) for fastening a protrusion (50) to the first member (20), and/or a second reversible fastening device (90) for fastening an abutment to the second member (30).

17. Coupling means according to any one of claims 1 to 16,
**characterised in that** the coupling means (10) comprises:
- said first member (20) provided with the first hollow cylinder extending axially, a first base (23) of a first diaphragm (22) being secured to the first cylinder (21),
- said second member (30) provided with the second hollow cylinder (31) extending axially, a second base (33) of a second diaphragm (32) being secured to the second cylinder (22), a second outer periphery (34) of the second diaphragm (32) being fastened to a first outer periphery (24) of the first diaphragm (22),
- a plurality of said protrusions (50) secured to the first cylinder (21), each protrusion (50) projecting into an internal space (INT) of the coupling means,
- one abutment (60) per protrusion (50), each abutment being secured to said second cylinder and projecting into said internal space (INT), each protrusion (50) being wedged against an abutment and a second bearing face of the second member in the event of rupture of a diaphragm (22, 32).

18. Rotary mechanical transmission (5) provided with a first rotary unit (2) and a second rotary unit (3),
**characterised in that** the mechanical transmission (5) includes at least one coupling means (10) according to any one of claims 1 to 17.

19. Aircraft (1),
**characterised in that** said aircraft comprises a mechanical transmission (5) according to claim 18.
